# EUROPEAN PATENT SPECIFICATION

(11) **EP 1 268 598 B1**
(45) Date of publication and mention of the grant of the patent: **11.06.2008**
(21) Application number: 01906929.3
(22) Date of filing: 02.02.2001
(51) Int. Cl.: C08G 18/48, C08G 18/50, C08G 18/66

(54) **LOW EMISSION POLYURETHANE FLEXIBLE FOAM MADE WITH AUTOCATALYTIC POLYOLS**
POLYURETHAN-WEICHSCHAUM MIT NIEDRIGER EMISSION, HERGESTELLT MIT AUTOKATALYTISCH WIRKENDEN POLYOLEN
MOUSSE DE POLYURETHANES FLEXIBLES A FAIBLE TAUX D'EMISSION FABRIQUES AVEC DES POLYOLS AUTOCATALYTIQUES

(30) Priority: 10.02.2000 US 181617 P
(43) Date of publication of application: 02.01.2003
(73) Proprietor: DOW GLOBAL TECHNOLOGIES INC., Midland, Michigan 48674 (US)
(72) Inventor: WADDINGTON, Simon, CH-8925 Ebertswil (CH); SONNEY, Jean-Marie L., CH-1276 Gingins (CH); ELWELL, Richard J., NL-4535 EC Terneuzen (NL); CASATI, Francois, M., 01280 Prevessin-Moens (FR); STORIONE, Antoine, 1220 Geneva (CH)
(74) Representative: Raynor, John
(86) International application number: PCT/US2001/003484
(87) International publication number: WO 2001/058976

(56) References cited:
- US-A- 3 094 434
- US-A- 4 296 230
- US-A- 5 512 602
- PATENT ABSTRACTS OF JAPAN vol. 018, no. 568 (C-1266), 31 October 1994 (1994-10-31) & JP 06 206969 A (MITSUI TOATSU CHEM INC), 26 July 1994 (1994-07-26)

## Description

The present invention pertains to low emission polyurethane flexible foams based on autocatalytic polyols and to the process for their manufacture.

Polyether polyols based on the polymerization of alkylene oxides, and/or polyester polyols, are the major components of a polyurethane system together with isocyanates. These systems generally contain additional components such as cross-linkers, chain extenders, surfactants, cell regulators, stabilizers, antioxidants, flame retardant additives, eventually fillers, and typically catalysts such as tertiary amines and/or organometallic salts.

Organometallic catalysts, such as lead or mercury salts, can raise environmental issues due to leaching upon aging of the polyurethane products. Others, such as tin salts, are often detrimental to polyurethane aging.

The commonly used tertiary amine catalysts give rise to several problems, particularly in flexible, semi-rigid and rigid foam applications. Freshly prepared foams using these catalysts often exhibit the typical odor of the amines and give rise to increased fogging (emission of volatile products).

The presence, or formation, of even traces of tertiary amine catalyst vapors in polyurethane products having vinyl films or polycarbonate sheets exposed thereto can be disadvantageous. Such products commonly appear in automotive interiors as seats, armrests, dashboards or instrument panels, sun visors, door linings, noise insulation parts either under the carpet or in other parts of the car interior or in the engine compartment, as well as in many domestic applications such as shoe soles, cloth interliners, appliance, furniture and bedding. While these materials perform excellently in these applications, they possess a deficiency that has been widely recognized. Specifically, the tertiary amine catalysts present in polyurethane foams have been linked to the staining of the vinyl film and degradation of polycarbonate sheets. This PVC staining and polycarbonate decomposition problems are especially prevalent in environments wherein elevated temperatures exist for long periods of time, such as in automobile interiors, which favor emission of amine vapors.

Various solutions to this problem have been proposed. For instance, U.S. Patent 4,517,313 discloses the use of the reaction product of dimethylaminopropylamine and carbonic acid as a catalyst for use in the manufacture of polyurethane. The use of this catalyst is stated to reduce odor and vinyl staining relative to the use of standard triethylenediamine catalysts. However this amine catalyst cannot match the performance of a standard catalyst such as triethylenediamine in polyurethane curing since it is a much weaker catalyst. EP 176,013 discloses the use of specific aminoalkylurea catalysts in the manufacture of polyurethanes. Use of these catalysts is also said to reduce odor and vinyl staining through the use of relatively high molecular weight amine catalysts. Due to their high molecular weight, these amine catalysts are unable to readily migrate through a polyurethane foam and thus their propensity to produce odors and stain vinyl films is reduced. However, when subjected to elevated temperatures as are commonly encountered in automobile interiors parked outside during summer time, these compounds migrate within a foam to some degree.

Use of amine catalysts which contain a hydrogen isocyanate reactive group such as a hydroxyl or a primary and/or a secondary amine are proposed by catalyst suppliers. One such compound is disclosed in EP 747,407. A reported advantage of the catalyst composition is that they are incorporated into the polyurethane product. However those catalysts usually have to be used at high levels in the polyurethane formulation to compensate for their lack of mobility during the reactions to get normal processing conditions. As a result generally not all of these molecules have time to react with isocyanates and some traces of free amine are typically present in the final product, especially in the case of fast gelling and fast curing systems.

Pre-polymerization of reactive amine catalysts with a polyisocyanate and a polyol is reported in PCT WO 94/02525. These isocyanate-modified amines show comparable or enhanced catalytic activity compared with the corresponding non-modified amine catalysts. However, this process gives handling difficulties such as gel formation and poor storage stability.

Specific crosslinkers are proposed in U.S. Patent 4,963,399 to produce polyurethane foams that exhibit a reduced tendency to stain vinyl films. These crosslinkers cannot be used at levels sufficient to get the desired catalytic activity, since they negatively affect foam processing, due to too fast gelling, and foam properties such as tear strength and elongation at break are detrimentally affected due to a level of crosslinking density which is too high. Such disadvantages would also be present for long chain tertiary aminoalcohol crosslinkers as disclosed in EP 488,219.

Modification of polyols by partial amination has been disclosed in U.S. Patent 3,838,076. While this gives additional reactivity to the polyol, this does not allow adjustment of processing conditions since these aminated functions are rapidly tied in the polymer by reacting with the isocyanate. Hence they give fast initiation of the reactions but subsequently lose most of their catalytic activity and do not provide proper final curing.

Use of specific amine-initiated polyols is proposed in EP 539,819 and in U.S. Patent 5,672,636 as applied in semi-rigid and rigid polyurethane foam applications.

Acid modified polyoxypropyleneamine are used as catalysts in U.S. Patent 5,308,882 but still require the use of an organometallic co-catalyst. US3,094,434 discloses the manufacture of resilient foamed polyurethanes. US4,296,230 relates to a process for the production of polyurethane coatings.

Therefore, there continues to be a need for alternative means to control vinyl staining and polycarbonate decomposition by polyurethane compositions.

There also remains a need to eliminate or reduce the amount of amine catalysts and/or organometallic salts in producing polyurethane products.

It is an object of the present invention to produce flexible polyurethane foams containing a reduced level of conventional tertiary amine catalysts, a reduced level of reactive amine catalysts or flexible polyurethane foams produced in the absence of such amine catalyst. It is another objective of the present invention to produce flexible polyurethane foams containing a reduced level of organometallic catalyst or to produce such foams in the absence of organometallic catalysts. With the reduction of the amount of amine and/or organometallic catalysts needed or elimination of such catalysts, the disadvantages associated with such catalysts as given above can be minimized or avoided.

It is a further object of the present invention to provide polyols containing autocatalytic activity so that the industrial manufacturing process of the flexible polyurethane foam is not adversely affected and may even be improved by the reduction in the amount of conventional or reactive amine catalysts or in elimination of the amine catalyst, and/or by reduction or elimination of organometallic catalysts.

In another aspect, the use of the autocatalytic polyols of the present invention could reduce the level of amine catalysts to which workers would be exposed in the atmosphere in a manufacturing plant.

The present invention is a process for the production of a flexible polyurethane foam by reaction of a mixture of
(a) at least one organic polyisocyanate with
(b) a polyol composition having an average functionality of 2 to 5 and an average hydroxyl number of 20 to 100, wherein the polyol comprises, based on the total amount of polyol component (b):
   (b1) from 0 to 95 percent by weight of a polyol compound having a functionality of 2 to 8 and a hydroxyl number of from 20 to 100; and
   (b2) from 5 to 100 percent by weight of at least one polyol compound having a hydroxyl number of from 20 to 100 wherein the weight percent is based on the total amount of polyol component (b), and (b2) is
   (b2a) obtained by alkoxylation of at least one initiator molecule of the formula

      HₘA- (CH₂)ₙ-N(R)-(CH₂)ₚ₋AHₘ Formula (I)

      where n and p are independently integers from 2 to 6,
      A at each occurrence is independently oxygen or nitrogen,
      R is a C₁ to C₃ alkyl group,
      m is equal to 1 when A is oxygen and is 2 when A is nitrogen;
   or (b2b) a compound which contains an alkyl amine within the polyol chain or a dialkyl amino group pendant to the polyol chain wherein the polyol chain is obtained by copolymerization of at least one monomer containing an alkylaziridine or N, N-dialkyl glycidylamine with at least one alkylene oxide, wherein the alkyl or di-alkyl moiety of the amine is a C₁ to C₃ alkyl;
   or (b2c) a hydroxyl-tipped prepolymer obtained from the reaction of an excess of (b2a) or (b2b) with a polyisocyanate;
   or (b2d) is a blend selected from (b2a), (b2b) or (b2c);
(c) optionally in the presence of a blowing agent; and
(d) optionally additives or auxiliary agents known per se for the production of flexible polyurethane foams.

In another embodiment, the present invention is a process as disclosed above wherein the polyisocyanate (a) contains at least one polyisocyanate that is a reaction product of a excess of polyisocyanate with a polyol as defined by (b2a) or (b2b) above, or a mixture thereof.

In a further embodiment, the present invention is a process as disclosed above where the polyisocyanate contains a polyol-terminated prepolymer obtained by the reaction of an excess of polyol with a polyisocyanate wherein the polyol is a polyol as defined by (b2a) or (b2b) above, or a mixture thereof.

In still another embodiment, the present invention is an isocyanate-terminated prepolymer based on the reaction of a polyol as defined by (b2a), (b2b) or a mixture thereof with an excess of a polyisocyanate.

In yet another embodiment, the present invention is a polyol-terminated prepolymer based on the reaction of a polyisocyanate with an excess of polyol as defined by (b2a), (b2b) or a mixture thereof.

The polyols containing bonded alkyl amine groups as disclosed in the present invention are catalytically active and accelerate the addition reaction of organic polyisocyanates with polyhydroxyl or polyamino compounds and the reaction between the isocyanate and the blowing agent such as water or a carboxylic acid or its salts. The addition of these polyols to a polyurethane reaction mixture reduces or eliminates the need to include a conventional tertiary amine catalyst within the mixture or an organometallic catalyst. Their addition to polyurethane reaction mixtures can also reduce the mold dwell time in the production of molded foams or improve some polyurethane foam properties.

As the disclosed polyols have an autocatalytic activity, these polyols require less capping with primary hydroxyls, that is, less ethylene oxide capping to obtain the same performance in flexible molded foam (curing time) than conventional polyols when used under the same conditions.

In accordance with the present invention, a process for the production of flexible polyurethane foams is provided, whereby flexible polyurethane foams of relatively low odor and emission are produced. Furthermore, the flexible polyurethane foams produced in accordance with the invention exhibit a reduced tendency to stain vinyl films or to degrade polycarbonate sheets with which they are exposed, display excellent adhesion properties (in appropriate formulations), have a reduced tendency to produce 'blue haze' which is associated with the use of certain tertiary amine catalysts, are more environmental friendly through the reduction/elimination of organometallic catalysts and these new polyurethane products should be easier to recycle by chemolysis since they possess an inherent basicity. These advantages are achieved by including in the reaction mixture either a polyol containing a tertiary alkyl amine of Formula I as an initiator or a polyol containing an alkyl amine as part of the polyol chain, or a di-alkylamino group pendant to the polyol chain or by including such polyols as feedstock in the preparation of a SAN, PIPA or PHD copolymer polyol and adding them to the reaction mixture or by using such polyols in a prepolymer with a polyisocyanate alone or with an isocyanate and a second polyol.

The combination of polyols used in the present invention will be a combination of (b1) and (b2) as described above. As used herein the term polyols are those materials having at least one group containing an active hydrogen atom capable of undergoing reaction with an isocyanate. Preferred among such compounds are materials having at least two hydroxyls, primary or secondary, or at least two amines, primary or secondary, carboxylic acid, or thiol groups per molecule. Compounds having at least two hydroxyl groups per molecule are especially preferred due to their desirable reactivity with polyisocyanates.

Suitable polyols (b1) that can be used to produce polyurethane materials with the autocatalytic polyols (b2) of the present invention are well known in the art and include those described herein and any other commercially available polyol and/or SAN, PIPA or PHD copolymer polyols. Such polyols are described in Polyurethane handbook, by G. Oertel, Hanser publishers. Mixtures of one or more polyols and/or one or more copolymer polyols may also be used to produce polyurethane foams according to the present invention.

Representative polyols include polyether polyols, polyester polyols, polyhydroxy-ter-.ninated acetal resins, hydroxyl-terminated amines and polyamines. Examples of these and other suitable isocyanate-reactive materials are described more fully in U.S. Patent 4,394,491, the disclosure of which is incorporated herein by reference. Alternative polyols that may be used include polyalkylene carbonate-based polyols and polyphosphate-based polyols. Preferred are polyols prepared by adding an alkylene oxide, such as ethylene oxide, propylene oxide, butylene oxide, or a combination thereof, to an initiator having from 2 to 8, preferably 2 to 6 active hydrogen atoms. Catalysis for this polymerization can be either anionic or cationic, with catalysts such as KOH, CsOH, boron trifluoride, or a double cyanide complex (DMC) catalyst such as zinc hexacyanocobaltate.

The polyol or blends thereof employed depends upon the end use of the flexible polyurethane foam to be produced. The molecular weight or hydroxyl number of the base polyol may thus be selected so as to result in flexible, foams, when the polymer/polyol produced from the base polyol is converted to a polyurethane product by reaction with an isocyanate, and depending on the end product in the presence or not of a blowing agent. The hydroxyl number and molecular weight of the polyol or polyols employed can vary accordingly over a wide range. In general, the hydroxyl number of the polyols employed may range from about 20 to about 800.

In the production of a flexible polyurethane foam, the polyol is preferably a polyether polyol and/or a polyester polyol. The polyol generally has an average functionality ranging from 2 to 5, preferably 2 to 4, and an average hydroxyl number ranging from 20 to 100 mg KOH/g, preferably from 20 to 70 mgKOH/g. As a further refinement, the specific foam application will likewise influence the choice of base polyol. As an example, for molded foam, the hydroxyl number of the base polyol may be on the order of about 20 to about 60 with ethylene oxide (EO) capping, and for slabstock foams the hydroxyl number may be on the order of about 25 to about 75 and is either mixed feed EO/PO (propylene oxide) or is only slightly capped with EO.

The initiators for the production of polyols (b1) generally have 2 to 8-functional groups, that will react with alkylene oxides. Examples of suitable initiator molecules are water, organic dicarboxylic acids, such as succinic acid, adipic acid, phthalic acid and terephthalic acid and polyhydric, in particular dihydric to octahydric alcohols or dialkylene glycols, for example, ethanediol, 1,2- and 1,3-propanediol, diethylene glycol, dipropylene glycol, 1,4-butanediol, 1,6-hexanediol, glycerol, trimethylolpropane, pentaerythritol, sorbitol and sucrose or blends thereof. Other initiators include compounds linear and cyclic compounds containing a tertiary amine such as ethanoldiamine, triethanoldiamine, and various isomers of toluene diamine.

The autocatalytic polyols (b2) are those initiated with an alkyl amine as given by Formula I or containing an alkyl amine as part of the polyol chain. As part of the polyol chain means that this alkyl amine group can be introduced in the chain by using N-alkylaziridine or N,N-dialkyl glycidylamine as a comonomer with ethylene oxide and/or propylene oxide in the production of an autocatalytic polyether polyol. The term alkyl as used herein with the alkylaziridine or N,N-dialkyl glycidylamine means a C₁ to C₃ alkyl. In a preferred embodiment the alkyl group is methyl. Processes for making such compounds are known in the art.

The properties of the autocatalytic polyols can vary widely as described above for polyol b(1) and such parameters as average molecular weight, hydroxyl number, functionality, etc. will generally be selected based on the end use application of the formulation, that is, what type of polyurethane product. Selection of a polyol with the appropriate hydroxyl number, level of ethylene oxide, propylene oxide and butylene oxide, functionality and equivalent weight are standard procedures known to those skilled in the art. For example, polyols with a high level of ethylene oxide will be hydrophilic and may be more prone to catalyze the water-isocyanate or urea reaction, while polyols with a high amount of propylene oxide or butylene oxide will be more hydrophobic and will favor the urethane reaction. It is also clear that the type of molecule based on Formula I will also influence the type of catalytic activity. For instance, when A is oxygen the hydrophilicity of (b2) will be higher than when A is nitrogen and/or hydrogen.

The production of polyols containing the compounds of Formula I as an initiator can be done by procedures well known in the art as disclosed for b(1) In general, a polyol (b2a) is made by the addition of an alkylene oxide (EO, PO, BO or glycidol), or a combination of alkylene oxides to the initiator by anionic or cationic reaction, use of KOH, CsOH, DMC catalyst, or tertiary oxonium salts as described in FR 2,053,045. The addition of the first alkylene oxide moles onto the product of formula I can be done auto-catalytically, that is, without addition of catalyst. Processing conditions such a reactor temperature and pressure, feeding rates are adjusted to optimize production yield. Of particular importance is the polyol unsaturation which is below 0.1 meq/g.

For some applications only one alkylene oxide monomer is used, for other applications a blend of monomers is used and in some cases a sequential addition of monomers is preferred, such as PO followed by an EO feed, EO followed by PO, etc. Use of glycidol gives polyols with increased functionalities. Other possibilities to get polyols with functionalities higher than the starter molecules is coupling of these starters with a diisocyanate or use of a diepoxide compound such as ERL 4221 made by Union Carbide.

The polyols of (b2a) and (b2b) include conditions where the polyol is reacted with a polyisocyanate to form a prepolymer and subsequently polyol is added to such a prepolymer.

Monols based on the definition of Formula I can also be used in polyurethane systems, either as softening additives or as viscosity reducers.

Polyester polyols can be prepared by the reaction of (b2a) or (b2b) with a diacid. These can be used in combination with conventional polyester polyols as used today in slabstock or in elastomers, such as shoe soles.

The limitations described with respect to the characteristics of the polyols b(1) and b(2) above are not intended to be restrictive but are merely illustrative of the large number of possible combinations for the polyol or polyols used.

In a preferred embodiment of Formula I, R is methyl. In another preferred embodiment R is methyl and n and p are integers of the same value. In a more preferred embodiment n and p are an integer of 2 to 4. Preferably when A is not hydrogen, A at each occurrence will be either oxygen or nitrogen. In a more preferred embodiment one A will be oxygen and the other A will be oxygen, and the final polyol (b2a) will be a triol.

The alkyl amines of Formula I are commercially available or can be made by techniques known in the art, such as U.S. Patent 4,605,772, the disclosure of which is incorporated herein by reference. For example, methylamine is reacted with the appropriate alkylene oxide for producing compounds where A is oxygen. Preferably the alkylene oxide is ethylene oxide, propylene oxide, or butylene oxides, which gives a preferred range of 2 to 4 for n when each A is oxygen. Preferred compounds are N-methyldiethanolamine, N-methyldipropanolamine, N-methyldibutanol-amine, N-methylethanol-propananol-amine

For producing compounds where each A is nitrogen, methyl amine can be reacted with any known reactive group that reacts with an amine and contains an additional nitrogen. For example, 2 moles of X(CH₂)ₙNR'R' can be reacted with one mole of methylamine where X represents chlorine, bromine or iodine, and R' and R" can be H or an alkyl group. Preferred compounds include 3,3'-diamino-N-methyldipropylamine, 2,2'-diamino-N-methyldiethylamine, 2,3-diamino-N-methyl-ethyl-propylamine.

For producing compounds where one A is nitrogen and one A is oxygen, one can use a process such as the one described in JP 09,012,516, the disclosure of which is incorporated herein by reference.

Examples of commercially available compounds of Formula I include N-methyldiethanolamine, 3,3'-diamino-N-methyldipropylamine and N-(2-hydroxyethyl)-N-methyl-1,3-propanediamine.

The weight ratio of (b1) to (b2) will vary depending on the amount of additional catalyst one may desire to add to the reaction mix and to the reaction profile required by the specific application. Generally if a reaction mixture with a base level of catalyst having specified curing time, (b2) is added in an amount so that the curing time is equivalent where the reaction mix contains at least 10 percent by weight less catalyst. Preferably the addition of (b2) is added to give a reaction mixture containing 20 percent less catalyst than the base level. More preferably the addition of (b2) will reduce the amount of catalyst required by 30 percent over the base level. For some applications, the most preferred level of (b2) addition is where the need for a volatile tertiary or reactive amine catalysts or organometallic salt is eliminated.

Combination of two or more autocatalytic polyols of (b2) type can also be used with satisfactory results in a single polyurethane formulation when one wants for instance to adjust blowing and gelling reactions modifying the two polyol structures with different functionalities, equivalent weights, ratio EO/PO etc, and their respective amounts in the formulations.

Acid neutralization of the polyol (b2) can also be considered when for instance delayed action is required. Acids used can be carboxylic acids such as formic or acetic acids, an amino acid or a non-organic acid such as sulfuric or phosphoric acid. More preferred options are carboxylic acids having hydroxyl functionality as described in U.S. Patent 5,489,618 or carboxylic acids having halofunctionality and optionally hydroxyl functionality or aryloxy substituted carboxylic acids.

Polyols pre-reacted with polyisocyanates and polyol (b2) with no free isocyanate functions can also be used,in the polyurethane formulation. Isocyanate prepolymers based on polyol (b2) can be prepared with standard equipment, using conventional methods, such a heating the polyol (b2) in a reactor and adding slowly the isocyanate under stirring and then adding eventually a second polyol, or by prereacting a first polyol with a diisocyanate and then adding polyol (b2).

The isocyanates which may be used with the autocatalytic polyols of the present invention include aliphatic, cycloaliphatic, arylaliphatic and aromatic isocyanates. Aromatic isocyanates, especially aromatic polyisocyanates are preferred.

Examples of suitable aromatic isocyanates include the 4,4'-, 2,4' and 2,2'-isomers of diphenylmethane diisocyante (MDI), blends thereof and polymeric and monomeric MDI blends toluene-2,4- and 2,6-diisocyanates (TDI), m- and p-phenylenediisocyanate, chlorophenylene-2,4-diisocyanate, diohenylene-9,9'-diisocyanate, 9,4'-diisocyanate-3,3`-dimehtyldiphenyl, 3-methyldiphenyl-methane-4,4'-diisocyanate and diphenyletherdiisocyanate and 2,4,6-triisocyanatotoluene and 2,4,4'-triisocyanatodiphenylether.

Mixtures of isocyanates may be used, such as the commercially available mixtures of 2,4- and 2,6-isomers of toluene diisocyantes. A crude polyisocyanate may also be used in the practice of this invention, such as crude toluene diisocyanate obtained by the phosgenation of a mixture of toluene diamine or the crude diphenylmethane diisocyanate obtained by the phosgenation of crude methylene diphenylamine. Especially preferred are methylene-bridged polyphenyl polyisocyanates and mixtures thereof with crude diphenyl methylene diisocyanates. TDI/MDI blends may also be used. MDI or TDI based prepolymers can also be used, made either with polyol (b1), polyol (b2) or any other polyol as described heretofore. Isocyanate-terminated prepolymers are prepared by reacting an excess of polyisocyanate with polyols, including aminated polyols or imines/enamines thereof, or polyamines.

Examples of aliphatic polyisocyanates include ethylene diisocyanate, 1,6-hexamethylene diisocyanate, 1,4-tetramethylene diisocyanate, isophorone diisocyanate, cyclohexane 1,4-diisocyanate, 4,4'-dicyclohexylmethane diisocyanate, saturated analogues of the above mentioned aromatic isocyanates and mixtures thereof. For the production of flexible foams, the preferred polyisocyanates are the toluene-2,4- and 2,6-diisocyanates or MDI or combinations of TDI/MDI or prepolymers made therefrom.

Isocyanate tipped prepolymer based on polyol (b2) can also be used in the polyurethane formulation. It is thought that using such an autocatalytic polyol in a polyol isocyanate reaction mixture will reduce/eliminate the presence of unreacted isocyanate monomers.

For flexible foam, the organic polyisocyanates and the isocyanate reactive compounds are reacted in such amounts that the isocyanate index, defined as the number or equivalents of NCO groups divided by the total number of isocyanate reactive hydrogen atom equivalents multiplied by 100, is generally between 50 and 120 and preferably between 75 and 110.

For producing a polyurethane-based foam, a blowing agent is generally required. In the production of flexible polyurethane foams, water is preferred as a blowing agent. The amount of water is preferably in the range of from 0.5 to 10 parts by weight, more preferably from 2 to 7 parts by weight based on 100 parts by weight of the polyol. Carboxylic acids or salts as described in BE 893,705 are also used as blowing agents and polyols such as (b2) are especially effective for this application since these autocatalytic polyols are less sensitive to acidity than conventional amine catalysts which lose most of their catalytic activity when neutralized.

Hydrocarbon blowing agents are volatile C₁ to C₅ hydrocarbons. The use of hydrocarbons is known in the art as disclosed in EP 421 269 and EP 695 322, the disclosures of which are incorporated herein by reference. Preferred hydrocarbon blowing agents are butane and isomers thereof, pentane and isomers thereof (including cyclopentane), and combinations thereof.

Examples of fluorocarbons include methyl fluoride, perfluoromethane, ethyl fluoride, 1,1-difluoroethane, 1,1,1-trifluoroethane (HFC-143a), 1,1,1,2-tetrafluoroethanz (HFC-134a), pentafluoroethane, difluoromethane, perfluoroethane, 2,2-difluoropropane, 1.1,1-trifluoropropane, perfluoropropane, dichloropropane, difluoropropane, perfluorobutane, perfluorocyclobutane.

Partially halogenated chlorocarbons and chlorofluorocarbons for use in this invention include methyl chloride, methylene chloride, ethyl chloride, 1,1,1-trichloroethane, 1,1-dichloro-1-fluoroethane (FCFC-141b), 1-chloro-1,1-difluoroethane (HCFC-142b), 1,1-dichloro-2,2,2-trifluoroethane (HCHC-123) and 1-chloro-1,2,2,2-tetrafluoroethane (HCFC-124).

Fully halogenated chlorofluorocarbons include trichloromonofluoromethane (CFC-11) dichlorodifluoromethane (CFC-12), trichlorotrifluoroethane (CFC-113), 1,1,1-trifluoroethane, pentafluoroethane, dichlorotetrafluoroethane (CFC-114), chloroheptafluoropropane, and dichlorohexafluoropropane. The halocarbon blowing agents may be used in conjunction with low-boiling hydrocarbons such as butane, pentane (including the isomers thereof), hexane, or cyclohexane or with water.

Use of carbon dioxide, either as a gas or as a liquid, as auxiliary blowing agent is especially of interest when water is present with the present technology since polyols (b2) are less sensitive to acidity than conventional amines.

In addition to the foregoing critical components, it is often desirable to employ certain other ingredients in preparing polyurethane polymers. Among these additional ingredients are surfactants, preservatives, flame retardants, colorants, antioxidants, reinforcing agents, stabilizers and fillers.

In making polyurethane foam, it is generally preferred to employ an amount of a surfactant to stabilize the foaming reaction mixture until it cures. Such surfactants advantageously comprise a liquid or solid organosilicone surfactant. Other surfactants include polyethylene glycol ethers of long-chain alcohols, tertiary amine or alkanolamine salts of long-chain alkyl acid sulfate esters, alkyl sulfonic esters and alkyl arylsulfonic acids. Such surfactants are employed in amounts sufficient to stabilize the foaming reaction mixture against collapse and the formation of large, uneven cells. Typically, 0.2 to 3 parts of the surfactant per 100 parts by weight total polyol (b) are sufficient for this purpose.

Use of (b2) is also of interest with semi-rigid foams, shock absorbing foams, water dispersible latex, elastomers, integral skin foams, RIM materials, PUR cast systems, paints and coatings, adhesive, binders, all applications described in "Polyurethane Handbook", edited by G. Oertel, Hanser publishers, Munich. For these applications no changes of processing are required when using polyol (b2) of the present invention. Only a reduction or elimination of conventional, migratory catalysts is obtained.

One or more catalysts for the reaction of the polyol (and water, if present) with the polyisocyanate can be used. Any suitable urethane catalyst may be used, including tertiary amine compounds, amines with isocyanate reactive groups and organometallic compounds. Preferably the reaction is carried out in the absence of an amine or an organometallic catalyst or a reduced amount of catalyst as described above. Exemplary tertiary amine compounds include triethylenediamine, N-methylmorpholine, N,N-dimethylcyclohexylamine, pentamethyldiethylenetriamine, tetramethylethylenediamine, bis (dimethylaminoethyl)ether, 1-methyl-4-dimethylaminoethylpiperazine, 3-methoxy-N-dimethylpropylamine, N-ethylmorpholine, dimethylethanolamine, N-cocomorpholine, N,N-dimethyl-N',N'-dimethyl isopropylpropylenediamine, N,N-diethyl-3-diethylaminopropylamine and dimethylbenzylamine. Exemplary organometallic catalysts include organomercury, organolead, organoferric and organotin catalysts, with organotin catalysts being preferred among these. Suitable tin catalysts include stannous chloride, tin salts of carboxylic acids such as dibutyltin di-laurate, as well as other organometallic compounds such as are disclosed in U.S. Patent 2,846,408. A catalyst for the trimerization of polyisocyanates, resulting in a polyisocyanurate, such as an alkali metal alkoxide or quaternary ammonium carbonylate salts as described in US 4,040,992 and such as Dabco TMR sold by Air Products and Chemicals Inc may also optionally be employed herein. The amount of catalyst can vary from 0.02 to 5 percent in the formulation or organometallic catalysts from 0.001 to 1 percent in the formulation can be used.

A crosslinking agent or a chain extender may be added, if necessary. The crosslinking agent or the chain extender includes low-molecular polyhydric alcohols such as ethylene glycol, diethylene glycol, 1,4-butanediol, and glycerin; low-molecular amine polyol such as diethanolamine and triethanolamine; polyamines such as ethylene diamine, xlylenediamine, and methylene-bis(o-chloroaniline). The use of such crosslinking agents or chain extenders is known in the art as disclosed in U.S. Patents 4,863,979 and 4,963,399 and EP 549,120, the disclosure of which are incorporated herein by reference.

The applications for foams produced by the present invention are those known in the industry. Flexible foams and elastomers find use in applications such as furniture, shoe soles, automobile seats, sun visors, steering wheels, armrests, door panels, noise insulation parts and dashboards. Addition of recycled powder foam into the polyurethane products object of the invention, as disclosed for example in EP 711,221 or in GB 922,306, can also be practiced with the present invention.

Processing for producing flexible polyurethane foams are well known in the art. In general components of the polyurethane-forming reaction mixture may be mixed together in any convenient manner, for example by using any of the mixing equipment described in the prior art for the purpose such as described in Polyurethane Handbook, by G. Oertel, Hanser publisher.

The flexible polyurethane foams are either produced continuously or discontinuously, by injection, pouring, spraying, casting, calendering, etc; these are made under free rise or molded conditions, with or without release agents, in-mold coating, or any inserts or skin put in the mold. In case of flexible foams, those can be mono- or dual-hardness.

Flexible foams are either free rise and molded while microcellular elastomers are usually molded.

The following examples are given to illustrate the invention and should not be interpreted as limiting in anyway. Unless stated otherwise, all parts and percentages are given by weight.

A description of the raw materials used in the examples is as follows:
- DEOA 100 %: is pure diethanolamine.
- Niax L3002: is a silicon surfactant available from CK-Witco-Osi Specialties.
- Tegostab B8715 LF: is a silicon-based surfactant available from Goldschmidt AG.
- Tegostab B8719 LF: is a silicon-based surfactant available from Goldschmidt AG.
- Tegostab B8427: is a silicon-based surfactant available from Goldschmidt AG.
- Dabco NE-1060: is a reactive amine catalyst available from Air Products and Chemical Inc.
- Dabco 33 LV: is a tertiary amine catalyst available from Air Products and Chemicals Inc.
- Dabco DMEA: is a tertiary amine catalyst available from Air Products and Chemicals Inc.
- Polycat 8: is a tertiary amine catalyst available from Air Products and Chemicals Inc.
- Toyocat RX-20: is a reactive amine catalyst available from Tosoh Corporation.
- Niax A-1: is a tertiary amine catalyst available from CK-Witco-Osi Specialties Inc.
- Niax A-4: is a tertiary amine catalyst available from CK-Witco Osi Specialties Inc.
- Niax C-182: is a blend of tertiary amine catalysts available from CK-Witco-Osi Specialties Inc.
- VORANOL CP 1421: is glycerine initiated polyoxypropylene polyoxyethylene polyol having an average hydroxyl number of 32 available from The Dow Chemical Company.
- VORANOL 9815: is a glycerol initiated polyoxypropylene polyoxyethylene polyol having an average hydroxyl number of 28 available from The Dow Chemical Company.
- VORANOL CP 6001: is a glycerol initiated polyoxypropylene polyoxyethylene polyol having an average hydroxyl number of 28 available from The Dow Chemical Company.
- VORANOL CP 4702: is a glycerol initiated polyoxypropylene polyoxyethylene polyol having an average hydroxyl number of 32 available from The Dow Chemical Company.
- VORANOL CP 3001: is a glycerol initiated polyoxypropylene polyoxyethylene polyol having an average hydroxyl number of 56 available from The Dow Chemical Company.
- VORANOL EP 2001: is a dipropylene glycol (DPG) initiated polyoxypropylene, polyoxyethylene diol with an average hydroxyl number of 56 available from The Dow Chemical Company.
- 1,4-BDO: is 1,4-butane diol dried with Baylith L paste, a molecular sieve.
- SPECFLEX NC-700: is a 40% SAN based copolymer polyol with an average hydroxyl number of 20 available from The Dow Chemical Company.
- VORANOL RH 360: is a high functional polyol with an average hydroxyl number of 360 available from The Dow Chemical Company.
- ISONATE M-125: is an MDI based isocyanate available from The Dow Chemical Company.
- Isonate M-140: is an MDI based isocyanate available from the Dow Chemical Company.
- SPECFLEX NS 540: is an MDI-based isocyanate available from The Dow Chemical Company.
- VORANATE T-80: is TDI 80/20 available from The Dow Chemical Company.
- VORANATE M-229: is a PMDI available from The Dow Chemical Company.
- Polyol A: is a 1,000 equivalent weight propoxylated diol with 15% EO capping initiated with N-methyl diethanolamine.
- Polyol B: is a 1,000 EW propoxylated tetrol with 15% EO capping initiated with 3,3'-diamino-N-methyldipropylamine.
- Polyol C: is a prepolymer based on an equal molar reaction between polyol A, Isonate M-125 and VORANOL CP 4702. (Polyol A is reacted at 50°C with VORANOL CP 4702 using isocyanate M-125 in a stoichiometric ratio of polyol A, VORANOL CP 4702 and Isonate M-125. The final polymerization is carried out at 75°C for three hours. Polyol C has a viscosity of 28,000 mPa·s at 25°C).
- Polyol D: is a prepolymer based on one mole of polyol A reacted with 2 moles of Isonate M-125 and 2 moles of VORANOL CP 3001 (same procedure for this reaction as with polyol C).
- Polyol E: is a 1,000 EW propoxylated tetrol with 16% EO capping initiated with Ethylenediamine.
- Polyol F: is a 1,700 EW propoxylated tetrol With 15 % EO capping,initiated with 3,3'-Diamino-N-methyl dipropylamine.
- Polyol G: is a 200 EW propoxylated tetrol initiated with 3,3'-Diamino-N-methyl dipropylamine.
- Isocyanate H: is a prepolymer based on one mole of polyol A reacted with 2 moles of Isonate M-125.
- Isocyanate I: is a prepolymer based on one mole of VORANOL EP 2001 reacted with 2 moles of Isonate M-125.

All foams were made in the laboratory by preblending polyols, surfactants, crosslinkers, catalysts and water, then by adding the isocyanates under stirring at 3,000 RPM for 5 seconds. At the end of mixing the reactants are poured either in a cardboard box or in a plastic cup for free rise foaming, or are poured in a 30x30x10 cm aluminum mold heated at 55°C which is subsequently closed. The release agent used is Klueber 41-2013 available from Klueber Chemie. With free rise foams main reactivity parameters such as cream time, gel time and full rise time are recorded. In the case of molded parts, curing at a specific demolding times is assessed by manually demolding the part and looking at hand marking defects until the minimum demolding time is reached where there is no surface defects. With both free rise and molded foam, density in kg/m³ is measured since it is a critical parameter.

### Example 1

Free rise flexible foams were made according to formulation 1A and 1B based on polyols of the invention. For comparison free rise foams were made according to formulations 1C and 1D, using either a conventional amine-initiated polyol or the starter of polyol A as a catalyst at the same concentration as it is present in 100 part by weight of polyol A, both foams are not part of the invention (all formulations are in parts by weight). Data on the formulations and foam properties are given in Table I.

**TABLE I**

| | 1A | 1B | 1C* | 1D* |
|---|---|---|---|---|
| Polyol A | 100 | | | |
| Polyol B | | 100 | | |
| Polyol E | | | | 100 |
| VORANOL EP 2001 | | | 94.05 | |
| N-Methyldiethanol amine | | | 5.95 | |
| Niax L-3002 | 0.5 | 0.5 | 0.5 | 0.5 |
| Water | 4.4 | 4.4 | 4.4 | 4.4 |
| Specflex NS 540 | 54.6 | 54.6 | 54.6 | 54.6 |
| Cream Time (s) | 6 | 7 | 12 | 25 |
| Gel Time (s) | 38 | 44 | Collapsed | Collapsed |
| Rise Time (s) | 62 | 72 | | |
| Density (g/lt.) | 27.5 | 31.2 | N/A | N/A |

| | | | | |
|---|---|---|---|---|
| *Not an example of the present invention | | | | |

### Example 2

Two free rise and two molded flexible PU foams were made with the following formulations 2A and 2B, containing no amine catalysts and catalyzed only with polyols of the invention. As a comparison, two foams were produced with amine catalysts as reported in columns 2C (not part of the invention). For all of these foams the demolding time was 5 minutes. Data on the formulations and foam properties are given in Table II

**TABLE II**

| | Formulation 2A | | Formulation 2B | | Formulation 2C* | |
|---|---|---|---|---|---|---|
| Process | Free rise | Molded | Free rise | Molded | Free rise | Molded |
| VORANOL 9815 | 36 | 36 | 26 | 26 | 66 | 66 |
| Specflex NC 700 | 24 | 24 | 24 | 24 | 24 | 24 |
| VORANOL CP 1421 | 2.0 | 2.0 | 2.0 | 2.0 | 2.0 | 2.0 |
| Polyol B | 40 | 40 | 50 | 50 | 0 | 0 |
| Water | 2.5 | 2.5 | 2.5 | 2.5 | 2.5 | 2.5 |
| DEOA 100 % | 0.5 | 0.5 | 0.5 | 0.5 | 0.5 | 0.5 |
| Dabco NE-1060 | 0 | 0 | 0 | 0 | 0.25 | 0.25 |
| Toyocat RX-20 | 0 | 0 | 0 | 0 | . 0.25 | 0.25 |
| Tegostab B8715LF | 0.5 | 0.5 | 0.5 | 0.5 | 0.5 | 0.5 |
| Tegostab B8719LF | 0.15 | 0.15 | 0.15 | 0.15 | 0.15 | 0.15 |
| Specflex NS-540 | 38.2 | 38.2 | 38.2 | 38.2 | 38.2 | 38.2 |
| VORANATE T-80 | 4.2 | 4.2 | 4.2 | 4.2 | 4.2 | 4.2 |
| | | | | | | |
| Cream time (s) | 16 | | 15 | | 18 | |
| Gel time (s) | 143 | | 110 | | 130 | |
| Rise time (s) | 210 | | 160 | | 220 | |
| Density Kg/m3 | 64 | 59.6 | 53 | 58.9 | 50.6 | 56.4 |

| | | | | | | |
|---|---|---|---|---|---|---|
| *Not an example of the present invention. | | | | | | |

### Example 3

Two free rise and two molded flexible PU foams were made with either isocyanate F, a prepolymer based on polyol A or Isocyanate G (comparative) as reported under formulations 3A and 3B respectively. Data on the foam formulations and foam properties are given in Table III.

**TABLE III**

| | Formulation 3A | | Formulation 3B* | |
|---|---|---|---|---|
| Process | Free rise | Molded | Free rise | Molded |
| VORANOL 9815 | 66 | 66 | 66 | 66 |
| Specflex NC-700 | 24 | 24 | 24 | 24 |
| VORANOL CP-1421 | 2.0 | 2.0 | 2.0 | 2.0 |
| Water | 2.5 | 2.5 | 2.5 | 2.5 |
| DEOA 100 % | 0.5 | 0.5 | 0.5 | 0.5 |
| Dabco NE-1060 | 0.25 | 0.25 | 0.25 | 0.25 |
| Toyocat RX-20 | 0.25 | 0.25 | 0.25 | 0.25 |
| Tegostab B 8715LF | 0.5 | 0.5 | 0.5 | 0.5 |
| Tegostab B 8719LF | 0.15 | 0.15 | 0.15 | 0.15 |
| Specflex NS-540 | 36.9 | 36.9 | 36.9 | 36.9 |
| VORANATE T-80 | 4.1 | 4.1 | 4.1 | 4.1 |
| Isocyanate H | 12.5 | 12.5 | 0 | 0 |
| Isocyanate I | 0 | 0 | 12.5 | 12.5 |
| Minimum demold time (min) | | 4 | | 5 |
| Cream time s | 12 | | 19 | |
| Gel time s | 111 | | 132 | |
| Rise time s | 168 | | 255 | |
| Density kg/m3 | 47.3 | 56.7 | 51.5 | 58.1 |

| | | | | |
|---|---|---|---|---|
| *Not an example of the present invention. | | | | |

### Example 4

Three free rise foams 4A, 4B and 4C and three identical molded foams were produced using three different combinations of polyol A and polyol B and without having any other catalyst in the formulation. These tests confirm that reactivity profiles can be adjusted just by using blends of autocatalytic polyols without the need for conventional catalysis. Data on the formulations and foam properties is given in Table IV.

**TABLE IV**

| | 4 A | 4 B | 4C |
|---|---|---|---|
| VORANOL 9815 | 36 | 15.4 | 15.4 |
| Specflex NC 700 | 24 | 24 | 24 |
| Polyol A | 20 | 20.2 | 40.4 |
| Polyol B | 20 | 40.4 | 20.2 |
| VORANOL CP1421 | 2.0 | 2.0 | 2.0 |
| Water | 2.5 | 2.5 | 2.5 |
| DEOA 100 % | 0.5 | 0.5 | 0.5 |
| Tegostab B8715LF | 0.5 | 0.5 | 0.5 |
| Tegostab B8719LF | 0.15 | 0.15 | 0.15 |
| Specflex NS 540 | 38.2 | 38.2 | 38.2 |
| VORANATE T-80 | 4.2 | 4.2 | 4.2 |
| | | | |
| Cream time (s) | 17 | 13 | 12 |
| Gel time (s) | 118 | 81 | 81 |
| Rise time (s) | 155 | 129 | 105 |
| Free rise density | 49.8 | 53.5 | 52.6 |
| | | | |
| Minimum demolding time minutes | 4 | 4 | 4 |
| Molded density | 58.9 | 58.3 | 59.2 |

### Example 5

The addition of the auto-catalytic polyol to a standard NVH (Noise Vibration and Harshness) formulation improves the adhesion of the foam to the EPDM (Ethylene Propylene Diene Monomer Rubber), PA (Polyamide), and EVA (Ethylene Vinyl Acetate) heavy layer as shown by the formulation 5A and 5B. Data on the formulations and foam properties are given in Table V.

**TABLE V**

| | 5A* | 5B |
|---|---|---|
| VORANOL CP 6001 | 100 | 100 |
| Polyol A | | 10 |
| VORANOL CP 1421 | 3 | 3 |
| Niax L-3002 | 0.5 | 0.5 |
| Niax A-1 | 0.18 | 0.18 |
| Niax C-182 | 0.45 | 0.45 |
| Water | 4.65 | 4.65 |
| Specflex NS 540 | 54.6 | 54.6 |

| | | |
|---|---|---|
| *Not an example of the present invention. | | |

A piece of PA backed carpet was attached at the bottom of a 3-L polyethylene bucket using double sided tape. The foaming mixture was poured in the bucket. After 3 minutes, the foam was removed from the bucket. The foam from the formulation 5A showed no adhesion to the heavy layer. The foam prepared from formulation 5B showed a cohesive failure of the foam that left a layer of polyurethane sticking onto the PA sheet.

### Example 6

Accelerated aging tests under heat were carried out in closed containers in the presence of a PVC sheet under the following conditions: a foam sample size 50×50×50 mm (about 6 grams of foam) cut from each of the pads' cores produced with the formulations reported hereafter was placed in the bottom of a one-liter glass jar, then a piece of gray PVC skin reference E6025373A0175A obtained from a Benecke-Kaliko was hung with a Chromium-Nickel alloy based string supported by the rim of the jar which was then sealed. All of the jars were then put in an oven heated at 115°C for 72 hours (3 days). After cooling the PVC sheet was then measured for color changes using a Minolta Chroma Meter CR 210, which is a compact tristimulus color analyzer for measuring reflective colors of surfaces such as cloth or textured surfaces. The higher the reading and calculation of Delta E, the more colored is the sample after aging compared with the control sample of PVC skin which was aged by itself in a jar not containing any foam. The smaller the reading, the closer is the sample to the control PVC. This simple test measures the effect of the amine vapors coming from the foam on PVC dehydrochlorination and hence change in color and texture. For instance, foam 6A which is catalyzed with conventional tertiary amines and which is not part of the invention gives a strong blackening of the PVC skin as evidenced by the high Minolta rating of over 20. Data on the formulations and foam properties are given in Table VI.

**TABLE VI**

| | 6A* | 6B | 6C | 6D | 6E | 6F |
|---|---|---|---|---|---|---|
| VORANOL 9815 | 76 | 26 | 10 | 66 | 8 | 26 |
| Specflex NC-700 | 24 | 24 | 24 | 24 | 24 | 24 |
| Polyol A | | | 20 | | | |
| Polyol B | | 50 | | | | |
| Polyol C | | | | | 68 | |
| Polyol D | | | | | | 50 |
| VORANOL Cp-4702 | | | 46 | | | |
| VORANOL CP-1421 | 2.0 | 2.0 | 2.0 | 2.0 | 2.0 | 2.0 |
| Water | 2.5 | 2.5 | 2.5 | 2.5 | 2.5 | 2.5 |
| DEOA100% | 0.5 | 0.5 | 0.5 | 0.5 | 0.5 | 0.5 |
| Niax A-1 | 0.05 | | | | | |
| Niax A-4 | 1.6 | | | | | |
| Dabco 33LV | 0.05 | | | | | |
| Dabco NE-1060 | | | 0.25 | 0.25 | 0.25 | 0.25 |
| Toyocat RX-20 | | | 0.25 | 0.25 | 0.25 | 0.25 |
| Tegostab 88715LF | 0.5 | 0.5 | 0.5 | 0.5 | 0.5 | 0.5 |
| Tegostab B8719LF | 0.15 | 0.15 | 0.15 | 0.15 | 0.15 | 0.15 |
| Specflex NS-540 | 38.2 | 38.2 | 38.2 | 36.9 | 38.2 | 38.2 |
| VORANATE T-80 | 4.2 | 4.2 | 4.2 | 4.1 | 4.2 | 4.2 |
| Isocyanate F | | | | 12.5 | | |
| Minolta Rating | | | | | | |
| Delta E | 20.2 | 3.0 | 8.1 | 7.4 | 3.3 | 5.3 |

| | | | | | | |
|---|---|---|---|---|---|---|
| *Not part of the present invention | | | | | | |

Other embodiments of the invention will be apparent to those skilled in the art from a consideration of this specification or practice of the invention disclosed herein. It is intended that the specification and examples be considered as exemplary only, with the true scope and spirit of the invention being indicated by the following claims.

## Claims

1. A process for the production of a flexible polyurethane foam by reaction of a mixture of
(a) at least one organic polyisocyanate with
(b) a polyol composition having an average functionality of 2 to 5 and an average hydroxyl number of 20 to 100, wherein the polyol comprises, based on the total amount of polyol component (b)
(b1) from 0 to 95 percent by weight of a polyol compound having a functionality of 2 to 8 and a hydroxyl number of from 20 to 100 and
(b2) from 5 to 100 percent by weight of at least one polyol compound having a hydroxyl number of from 20 to 100,
wherein the weight percent is based on the total amount of polyol component (b), and (b2) is
(b2a) obtained by alkoxylation of at least one initiator molecule of the formula
HₘA- (CH₂) ₙ-N (R) - (CH₂)ₚ-AHₘ Formula (I)
where n and p are independently integers from 2 to 6,
A at each occurrence is independently oxygen or nitrogen,
R is a C₁ to C₃ alkyl group,
m is equal to 1 when A is oxygen and is 2 when A is nitrogen;
or (b2b) a compound which contains an alkyl, amine within the polyol chain or a dialkylylamino group pendant to the polyol chain wherein the polyol chain is obtained by copolymerization of at least one monomer containing an alkylaziridine or N,N-dialkyl glycidylamine with at least one alkylene oxide, wherein the alkyl or di-alkyl moiety of the amine is a C₁ to C₃ alkyl;
or (b2c) a hydroxyl-tipped prepolymer obtained from the reaction of an excess of (b2a) or (b2b) with a polyisocyanate;
or (b2d) is a blend selected from (b2a), (b2b) or (b2c);
(c) optionally in the presence of a blowing agent and
(d) optionally additives or auxiliary agents known per se for the production of flexible polyurethane foams.

2. The process of Claim 1 wherein A at each occurrence in Formula I is nitrogen.

3. The process of Claim 2 wherein the compound represented by Formula I is 3,3'-diamino-N-methyldipropylamine. 3,3'-diamino-N-ethyldipropylamine. Z,2'-diamin4-N-methyldiethylamine.

4. The process of Claim 1 wherein A at each occurrence in Formula I is oxygen.

5. The process of Claim 4 wherein the compound represented by Formula I is N-methyldiethanolamine or N-methyldipropanolamine.

6. The process of Claim 1 wherein one A in formula I is oxygen and the other A is nitrogen.

7. The process of Claim 6 wherein the compound represented by Formula I is N-(2-hydroxyethyl)-N-methyl-2,3-propanediamine, or N-(2-hydroxyethyl)-N-methyl-1,2-ethanediamine.

8. The process of Claim 1 wherein (b2b) is derived from an alkylaziridine.

9. The process of Claim 8 wherein the alkylaziridine is methylaziridine.

10. The process of Claim 1 wherein (b2b) is derived from an N,N-dialkyl glycidylamine.

11. The process of Claim 10 wherein the N,N-dialkyl glycidylamine is N,N-dimethyl glycidylamine.

12. The process of any one of Claims 1 to 11 wherein the polyols (b1) and (b2) have an average functionality of 2 to 4.

13. The process of Claim 12 wherein the blowing agent is water in an amount from 0.5 to 10 parts by weight based on 100 parts by weight of component b.

14. The process of Claim 13 wherein carbon dioxide is used either as a gas or as a liquid in the formulation to act as an auxiliary blowing agent.

15. The process of Claim 12 wherein an acid is used in the polyurethane formulation to act either as a delayed action additive or as a blowing agent in case of carboxylic acids.

16. The process of any one of Claims 12 to 15 wherein the polyisocyanate is toluene diisocyanate, polymethylene polyphenylene diisocyanate, isomers of diphenylmethylene diisocyanate or mixtures thereof.

17. The process of any one of the preceding Claims wherein the polyisocyanate (a) contains at least one polyisocyanate that is a reaction product of a excess of polyisocyanate with a polyol which contains an alkyl amine group of (b2a) or (b2b).

18. The process of any one of Claim 1 to 16 wherein the polyol (b) contains a polyol-terminated prepolymer obtained by the reaction of an excess of polyol with a polyisocyanate wherein the polyol is a polyol as defined by (b2) or is a mixture of (b2) with another polyol.

19. An autocatalytic polyol composition that contains from 5 to 100 percent by weight of a polyol obtained by alkoxylation of at least one initiator molecule of formula
HₘA- (CH₂)ₙ-N (R) - (CH₂)ₚ-AHₘ Formula (I)
where
n and p are independently integers from 2 to 6,
A and at each occurrence is independently oxygen, nitrogen or hydrogen, with the proviso that only one of A can be hydrogen at one time,
R is a C₁ to C₃ alkyl group
m is equal to 0 when A is hydrogen, is 1 when A is oxygen and is 2 when A is nitrogen;
with the proviso that the initiator is not N-methyl diethanolamine.

20. A prepolymer formed by reaction of an excess of polyisocyanate with a polyol as claimed in Claim 19.

21. A prepolymer formed by reaction of an excess of polyol as claimed in Claim 19, or a mixture thereof, with a polyisocyanate.

22. The process of any one of Claims 1 to 15 where the amount of (b2) is present in an amount so that the curing time is substantially equivalent to a similar reaction mixture containing standard polyurethane catalysts, where the reaction, mix with b2 contains at least 10 percent by weight less catalyst.

## Patentansprüche

1. Verfahren zur Herstellung eines flexiblen Polyurethanschaums durch Reaktion eines Gemischs aus
(a) mindestens einem organischen Polyisocyanat mit
(b) einer Polyolzusammensetzung mit einer mittleren Funktionalität von 2 bis 5 und einer mittleren Hydroxylzahl von 20 bis 100, worin das Polyol, basierend auf der Gesamtmenge Polyolkomponente (b), umfasst:
(b1) von 0 bis 95 Gewichtsprozent einer Polyolverbindung mit einer Funktionalität von 2 bis 8 und einer Hydroxylzahl von 20 bis 100 und
(b2) von 5 bis 100 Gewichtsprozent mindestens einer Polyolverbindung mit einer Hydroxylzahl von 20 bis 100,
worin das Gewichtsprozent auf der Gesamtmenge von Polyolkomponente (b) basiert, und worin (b2)
(b2a), erhalten durch Alkoxylierung mindestens eines Initiatormoleküls der Formel
HₘA-(CH₂)ₙ-N(R)-(CH₂)ₚ-AHₘ, Formel (I),
worin n und p unabhängig ganze Zahlen von 2 bis 6 sind, A bei jedem Auftreten unabhängig Sauerstoff oder Stickstoff ist,
R eine C₁- bis C₃-Alkylgruppe ist,
m gleich 1 ist wenn A Sauerstoff ist und 2 ist wenn A Stickstoff ist;
oder (b2b), eine Verbindung, die ein Alkylamin in der Polyolkette oder eine Dialkylaminogruppe als Nebengruppe zur Polyolkette enthält, worin die Polyolkette erhalten wird durch Copolymerisation mindestens eines Monomers, das ein Akylaziridin oder N,N-Dialkylglycidylamin enthält, mit mindestens einem Alkylenoxid, worin der Alkyl- oder Dialkylrest des Amins ein C₁- bis C₃-Alkyl ist,
oder (b2c) ein Hydroxyl-enthaltendes Präpolymer, erhalten aus der Reaktion eines Überschusses von (b2a) oder (b2b) mit einem Polyisocyanat, ist;
oder (b2d), ein Gemisch, ausgewählt aus (b2a), (b2b) oder (b2c), ist;
(c) optional in der Gegenwart eines Treibmittels und
(d) optionalen Additiven oder Hilfsmitteln, die an sich bekannt sind für die Herstellung flexibler Polyurethanschäume.

2. Verfahren nach Anspruch 1, worin A bei jedem Auftreten in Formel I Stickstoff ist.

3. Verfahren nach Anspruch 2, worin die durch Formel 1 dargestellte Verbindung 3,3'-Diamino-N-methyldipropylamin, 3,3'-Diamino-N-ethyldipropylamin, 2,2'-Diamino-N-methyldiethylamin ist.

4. Verfahren nach Anspruch 1, worin A bei jedem Auftreten in Formel I Sauerstoff ist.

5. Verfahren nach Anspruch 4, worin die durch Formel 1 dargestellte Verbindung N-Methyldiethanolamin oder N-Methyldipropanolamin ist.

6. Verfahren nach Anspruch 1, worin ein A in Formel I Sauerstoff ist und das andere A Stickstoff ist.

7. Verfahren nach Anspruch 6, worin die durch Formel dargestellte Verbindung N-(2-Hydroxyethyl)-N-methyl-1,3-propandiamin oder N-(2-Hydroxyethyl)-N-methyl-1,2-ethandiamin ist.

8. Verfahren nach Anspruch 1, worin (b2b) von einem Alkylaziridin abgeleitet ist.

9. Verfahren nach Anspruch 8, worin das Alkylaziridin Methylaziridin ist.

10. Verfahren nach Anspruch 1, worin (b2b) von einem N,N-Dialkylglycidylamin abgeleitet ist.

11. Verfahren nach Anspruch 10, worin das N,N-Dialkylglycidylamin N,N-Dimethylglycidylamin ist.

12. Verfahren nach einem der Ansprüche 1 bis 11, worin die Polyole (b1) und (b2) eine mittlere Funktionalität von 2 bis 4 aufweisen.

13. Verfahren nach Anspruch 12, worin das Treibmittel Wasser in einer Menge von 0,5 bis 10 Gewichtsteilen basierend auf 100 Gewichtsteilen Komponente b ist.

14. Verfahren nach Anspruch 13, worin Kohlendioxid entweder als ein Gas oder als eine Flüssigkeit in der Formulierung verwendet wird, um als ein Hilfstreibmittel zu wirken.

15. Verfahren nach Anspruch 12, worin eine Säure in der Polyurethanformulierung verwendet wird, um entweder als ein Additiv mit verzögerter Freisetzung oder als ein Treibmittel im Falle von Carbonsäuren zu wirken.

16. Verfahren nach einem der Ansprüche 12 bis 15, worin das Polyisocyanat Toluoldiisocyanat, Polymethylenpolyphenylendiisocyanat, Isomere von Diphenylmethylendiisocyanat oder Gemische davon ist.

17. Verfahren nach einem der vorhergehenden Ansprüche, worin das Polyisocyanat (a) mindestens ein Polyisocyanat enthält, das ein Reaktionsprodukt eines Überschusses von Polyisocyanat mit einem Polyol ist, das eine Alkylamingruppe von (b2a) oder (b2b) enthält.

18. Verfahren nach einem der Ansprüche 1 bis 16, worin das Polyol (b) ein Polyolterminiertes Präpolymer enthält, erhalten durch die Reaktion eines Überschusses von Polyol mit einem Polyisocyanat, worin das Polyol ein durch (b2) definiertes Polyol ist oder ein Gemisch von (b2) mit einem anderen Polyol ist.

19. Autokatalytische Polyolzusammensetzung, die von 5 bis 100 Gewichtsprozent eines Polyols enthält, erhalten durch Alkoxylierung mindestens eines Initiatormoleküls der Formel
HₘA-(CH₂)ₙ-N(R)-(CH₂)ₚ-AHₘ Formel (I)
worin n und p unabhängig ganze Zahlen von 2 bis 6 sind,
A bei jedem Auftreten unabhängig Sauerstoff, Stickstoff oder Wasserstoff ist, mit der Maßgabe, dass nur eines aus A gleichzeitig Wasserstoff sein kann,
R eine C₁- bis C₃-Alkylgruppe ist,
m gleich 0 ist wenn A Wasserstoff ist, 1 ist wenn A Sauerstoff ist, 2 ist wenn
A Stickstoff ist;
mit der Maßgabe, dass der Initiator nicht N-Methyldiethanolamin ist.

20. Präpolymer, gebildet durch Reaktion eines Überschusses Polyisocyanat mit einem Polyol nach Anspruch 19.

21. Präpolymer, gebildet durch Reaktion eines Überschusses Polyol nach Anspruch 19 oder eines Gemischs davon mit einem Polyisocyanat.

22. Verfahren nach einem der Ansprüche 1 bis 15, worin die Menge von (b2) in einem solchen Ausmaß vorliegt, dass die Härtungszeit im Wesentlichen äquivalent zu einem ähnlichen Reaktionsgemisch ist, das Standard-Polyurethankatalysatoren enthält, wobei das Reaktionsgemisch mit b2 mindestens 10 Gewichtsprozent weniger Katalysator enthält.

## Revendications

1. Procédé de production d'une mousse souple de polyuréthane, par réaction d'un mélange :
a) d'au moins un polyisocyanate organique,
b) et d'une composition de polyols présentant un nombre moyen de groupes fonctionnels de 2 à 5 et un indice moyen d'hydroxyle de 20 à 100, laquelle composition de polyols comprend, en pourcentages rapportés à la quantité totale du composant polyol (b),
b1) de 0 à 95 % en poids d'un composé polyol présentant de 2 à 8 groupes fonctionnels et un indice d'hydroxyle de 20 à 100,
b2) et de 5 à 100 % en poids d'au moins un composé polyol présentant un indice d'hydroxyle de 20 à 100,
lesdits pourcentages pondéraux étant rapportés à la quantité totale du composant polyol (b), et ledit composant (b2) étant :
b2a) obtenu par alcoxylation d'au moins un composé amorceur de formule
HₘA-(CH₂)ₙ-N(R)-(CH₂)ₚ-AHₘ Formule (I)
dans laquelle
n et p représentent chacun, indépendamment, un nombre entier valant de 2 à 6,
A représente, indépendamment en chaque occurrence, un atome d'oxygène ou d'azote,
R représente un groupe alkyle en C₁₋₃,
et m vaut 1 si A représente un atome d'oxygène et vaut 2 si A représente un atome d'azote,
b2b) ou un composé comportant un fragment alkyl-amino au sein de sa chaîne de polyol ou un groupe dialkyl-amino accroché à sa chaîne de polyol, laquelle chaîne de polyol a été obtenue par copolymérisation d'au moins un monomère comprenant une alkyl-aziridine ou une N,N-dialkyl-glycidylamine et d'au moins un oxyde d'alkylène, les groupes alkyle des fragments alkyle ou dialkyle de l'amine étant des groupes alkyle en C₁₋₃,
b2c) ou un prépolymère à terminaisons hydroxyle, obtenu par réaction d'un polyisocyanate et d'un composé (b2a) ou (b2b) en excès,
b2d) ou un mélange de composants choisis parmi les composés (b2a), (b2b) et (b2c),
c) en présence, en option, d'un agent d'expansion,
d) et, en option, d'adjuvants ou d'agents auxiliaires bien connus, servant à la production de mousses souples de polyuréthane.

2. Procédé conforme à la revendication 1, dans lequel, dans la formule (I), A représente en chaque occurrence un atome d'azote.

3. Procédé conforme à la revendication 2, dans lequel le composé représenté par la formule (I) est la 3,3'-diamino-N-méthyl-dipropylamine, la 3,3'-diamino-N-éthyl-dipropylamine ou la 2,2'-diamino-N-méthyl-diéthylamine.

4. Procédé conforme à la revendication 1, dans lequel, dans la formule (I), A représente en chaque occurrence un atome d'oxygène.

5. Procédé conforme à la revendication 4, dans lequel le composé représenté par la formule (I) est la N-méthyl-diéthanolamine ou la N-méthyldipropanolamine.

6. Procédé conforme à la revendication 1, dans lequel, dans la formule (I), l'un des symboles A représente un atome d'oxygène et l'autre symbole A représente un atome d'azote.

7. Procédé conforme à la revendication 6, dans lequel le composé représenté par la formule (I) est la N-(2-hydroxyéthyl)-N-méthyl-1,3-propanediamine ou la N-(2-hydroxyéthyl)-N-méthyl-1,2-éthanediamine.

8. Procédé conforme à la revendication 1, dans lequel le composé (b2b) est dérivé d'une alkyl-aziridine.

9. Procédé conforme à la revendication 8, dans lequel l'alkyl-aziridine est la méthyl-aziridine.

10. Procédé conforme à la revendication 1, dans lequel le composé (b2b) est dérivé d'une N,N-dialkyl-glycidylamine.

11. Procédé conforme à la revendication 10, dans lequel la N,N-dialkyl-glycidylamine est la N,N-diméthyl-glycidylamine.

12. Procédé conforme à l'une des revendications 1 à 11, dans lequel les polyols (b1) et (b2) présentent un nombre moyen de groupes fonctionnels de 2 à 4.

13. Procédé conforme à la revendication 12, dans lequel l'agent d'expansion est de l'eau, employée en une quantité de 0,5 à 10 parties en poids pour 100 parties en poids du composant (b).

14. Procédé conforme à la revendication 13, dans lequel on met dans la formulation du dioxyde de carbone, gazeux ou liquide, employé pour servir d'agent auxiliaire d'expansion.

15. Procédé conforme à la revendication 12, dans lequel on met dans la formulation de polyuréthane un acide, employé pour servir soit d'adjuvant à action retardée, soit, s'il s'agit d'un acide carboxylique, d'agent d'expansion.

16. Procédé conforme à l'une des revendications 12 à 15, dans lequel le polyisocyanate est du toluène-diisocyanate, un polyméthylène-polyphénylène-diisocyanate, un isomère du diphénylméthylène-diisocyanate, ou un mélange de ces composés.

17. Procédé conforme à l'une des revendications précédentes, dans lequel le polyisocyanate (a) comprend au moins un polyisocyanate qui est un produit de réaction d'un polyisocyanate en excès et d'un polyol à groupe alkyl-amino (b2a) ou (b2b).

18. Procédé conforme à l'une des revendications 1 à 16, dans lequel le polyol (b) comprend un prépolymère à terminaisons polyol, obtenu par réaction d'un polyisocyanate et d'un polyol en excès, lequel polyol est un polyol de type défini en (b2) ou un mélange d'un composé (b2) et d'un autre polyol.

19. Composition autocatalytique de polyol, contenant de 5 à 100 % en poids d'un polyol obtenu par alcoxylation d'au moins un composé amorceur de formule
HₘA-(CH₂)ₙ-N(R)-(CH₂)ₚ-AHₘ Formule (I)
dans laquelle
n et p représentent chacun, indépendamment, un nombre entier valant de 2 à 6,
A représente, indépendamment en chaque occurrence, un atome d'oxygène, d'azote ou d'hydrogène, sous réserve qu'un seul à la fois des symboles A puisse représenter un atome d'hydrogène,
R représente un groupe alkyle en C₁₋₃,
et m vaut 0 si A représente un atome d'hydrogène, 1 si A représente un atome d'oxygène et 2 si A représente un atome d'azote, sous réserve que cet amorceur ne soit pas de la N-méthyl-diéthanolamine.

20. Prépolymère formé par réaction d'un polyisocyanate en excès et d'un polyol défini dans la revendication 19.

21. Prépolymère formé par réaction d'un polyol défini dans la revendication 19, ou d'un mélange de tels polyols, en excès, et d'un polyisocyanate.

22. Procédé conforme à l'une des revendications 1 à 15, dans lequel le composé (b2) est employé en une quantité telle que le temps de durcissement est sensiblement équivalent à celui observé pour un mélange réactionnel similaire contenant des catalyseurs standard de préparation de polyuréthanes, et le mélange réactionnel comprenant ce composé (b2) contient au moins 10 % en poids de catalyseur en moins.
